# EUROPEAN PATENT SPECIFICATION

(11) **EP 0 293 025 B1**
(45) Date of publication and mention of the grant of the patent: **10.02.1993**
(21) Application number: 88200805.5
(22) Date of filing: 26.04.1988
(51) Int. Cl.: A01F 15/14, A01F 15/08

(54) **Knife assembly for net dispensing apparatus**
Schneidvorrichtung für Netzgewebespender
Système de coupe pour distributeur de filet

(30) Priority: 01.05.1987 US 45944; 01.05.1987 US 45977
(43) Date of publication of application: 30.11.1988
(73) Proprietor: FORD NEW HOLLAND, INC. (a Delaware corp.), New Holland Pennsylvania 17557 (US)
(72) Inventor: Merritt III, John H., New Holland Pennsylvania 17557 (US); Shenberger, Paul S., Wyomissing Pennsylvania 19610 (US)
(74) Representative: Vandenbroucke, Alberic

(56) References cited:
- DE-A- 3 418 681
- US-A- 4 343 132
- US-A- 4 407 113
- US-A- 4 409 784
- US-A- 4 676 046

## Description

The present invention relates generally to round balers utilized for making cylindrical bales of crop material and, more particularly, to a dispensing device for selectively introducing wrapping material such as netting material into the round baler's bale forming mechanism so that the finished bale can be wrapped with an outer layer of wrapping material.

Net dispensing mechanisms for use in conjunction with round balers to wrap the exterior of a finished round bale with a layer of netting material is a relatively recent feature being incorporated into round balers. One such net dispensing device can be found on the Claas Model Rollant 44 round baler which utilizes a tray to physically hold a roll of netting material, the netting material being fed between a driven resilient feed roller and a rigid pinch roller by which means the netting can be fed into the bale chamber of the round baler for wrapping around a completed round bale therewithin. A more detailed description of this prior art net dispensing device can be found with reference to, on the one hand, the detailed description of Fig. 9 and, on the other hand, GB-A-2.144.102.

The aforementioned Claas round baler utilizes a pivoted braking device through which the netting material is threaded to backwrap the netting material and increase the tension thereon when cutting thereof is desired. The Claas round baler then utilizes a swinging knife mounted on a pivot arm to impart a relatively high amount of impact energy into the netting material to cause a severing thereof when the desired amount of netting material has been applied to the completed cylindrical bale.

A somewhat similar arrangement is shown in DE-A-3.418.681 which proposes a net wrapper for a round baler and which comprises, on the one hand, a swinging knife disposed to forcefully engage with the net against an anvil for causing a severance of this net and, on the other hand, a braking mechanism which is operable, when the knife has pivoted to its cutting position, to frictionally engage with the drive to the wrapper feeder mechanism for slowing down and eventually also stopping the feeding movement thereof to thereby increase the tension in the net and hence to facilitate the severing action by the knife.

However, it has been found that these arrangements which utilize high impact energy of the knife to effect severance of the net, do not always perform fully satisfactorily, especially with certain types of netting.

Wrapper mechanisms with a knife assembly which impart only limited or no impact energy into the wrapping material for severing this wrapping material equally are known in the art as appears from US-A-4.407.113. The knife assembly of the wrapper mechanism shown therein, is disposed between a guide member for the wrapping material and the bale chamber inlet and has a segmented knife which is pivotally movable between inoperative and cutting positions which are situated rather closely adjacent to each other. In the inoperative position, the knife extends generally parallel to the path of the wrapping material from said guide member to said bale chamber inlet and, in the cutting position, said knife defines an acute angle with said path as the cutting edge thereof extends thereacross. Because of said limited spacing between the inoperative and cutting positions of the knife, only a minimal amount of impact energy, if any at all, is imparted into the wrapping material when this knife is moved to its cutting position.

Also, the wrapping mechanism according to US-A-4.407.113 equally comprises a braking mechanism which, however, is operable to brake the rotational feeding movement of the wrapping material supply roll to thereby provide a predetermined tension in the wrapping material extending from said supply roll via said guide member to the bale chamber inlet.

However, it has been found that this arrangement equally does not always perform fully satisfactorily, again more especially with certain types of netting material available on the market.

Accordingly, it is the object of this invention to overcome the aforementioned disadvantages of the prior art and, more particularly, to provide a round baler with a wrapping material dispensing apparatus of which the cutting mechanism does not require high impact energy and yet effects, under all circumstances, a fully satisfactory severance of the wrapping material.

According to the invention, a round baler is provided having wrapper means comprising:
- a feeding mechanism for selectively dispensing wrapping material from a wrapping material supply source into the bale forming chamber of the baler for wrapping a finished bale in said chamber therewith;
- drive means for selectively powering the feeding mechanism; and
- a knife assembly for severing said wrapping material after a sufficient amount thereof has been wrapped around said bale; said knife assembly including a knife holder with a knife member having a cutting edge attached thereto and being rotatably movable about a pivot axis between, on the one hand, a retracted, inoperative position wherein the knife holder engages the wrapping material in a manner so that the path thereof from the feeding mechanism to the bale chamber extends clear of the knife member cutting edge and determines a first angle around said knife holder and, on the other hand, a cutting position in which the knife member cutting edge engages the wrapping material to effect said severing thereof; the arrangement being such that, at the moment of said severing action, the path of said wrapping material from the feeding mechanism to the bale chamber determines a second angle around said edge which is smaller than said first angle;
   said baler being characterized in that :
- the wrapper means also include locking means which operably extend between the knife assembly and the feeding mechanism in a manner so that said knife assembly controls the operation of said locking means for selectively locking the feeding mechanism in a stationary position; the arrangement being such that, on the one hand, said locking means are in a retracted, inoperative position when the knife assembly itself also is in its own retracted, inoperative position and, on the other hand, movement of the knife assembly from its retracted, inoperative position to its cutting position causes the locking means to lock the feeding mechanism in said stationary position whereby further dispensing movement of this feeding mechanism is prevented so that the tensile force exerted by subsequent, continued wrapping of a finished bale with wrapping material in the bale chamber, is operable to effect said severing of said wrapping material along said knife member cutting edge.

Preferably, the knife assembly is disposed so that, when positioned in the cutting position, the knife member thereof is oriented generally parallel to the portion of the wrapping material which, prior to the wrapping material being severed, extends from the cutting edge to the bale chamber and this may be realized with a knife member which is oriented generally radially relative to the pivot axis thereof.

The drive means for operably powering the feeding mechanism preferably include drive engagement means for selectively effecting engagement of the drive to the feeding mechanism. Said drive engagement means are interconnected with the knife assembly such that an actuation of the drive engagement means for operating the feeding mechanism also causes movement of the knife assembly toward the retracted, inoperative position. Preferably, the drive engagement means are connected to the knife assembly by connecting linkage means including a lost motion device to permit limited movement of the tensioning pulley without causing movement of the knife assembly. The aforementioned drive means may include a drive belt powered from the main drive train of the round baler and the drive engagement means may be formed by a tensioning pulley connected to a pivot arm pivotally mounted on the round baler and pivotally movable into and out of engagement with the drive belt by a linear actuator. By interconnecting the knife assembly and the pivot arm by a connecting link, pivotal rotation of the knife assembly into and out of the cutting position is synchronized with the clutching and declutching of the feeding mechanism drive.

Preferably, the locking means are formed by a lockout arm which is engageable with a key on a shaft of the feeding mechanism to positively restrain the feeding mechanism from further rotation. The movement of the lockout arm is also synchronized to the movement of the tensioning pulley.

It is an advantage of this invention that actuation of the cutting knife into and out of a cutting position is accomplished by simply rotating a pivot shaft with the cutting knife extending generally radially therefrom.

It is still another advantage of this invention that the lockout arm is engageable with a key on a shaft of the feeding mechanism synchronously with the declutching of the drive to the feeding mechanism whereby the feeding mechanism positively is restrained from further rotation in conjunction with the declutching of the drive to said feeding mechanism. Also, in synchronisation with the positive restraining from further rotation of the feeding mechanism by the lockout arm, the knife is moved into the cutting position. As a consequence, the restrained feeding mechanism serves as a braking device to apply tension to the wrapping material between the feeding mechanism an the cylindrical bale to facilitate a cutting thereof by the knife. The tension applied to the wrapping material, by reason of the wrapping material feeding mechanism being halted and the cylindrical bale continuing in rotation, pulls the wrapping material across the cutting edge of the knife member to effect a severance thereof.

It is still another advantage of this invention that the wrapping material does not need to be threaded through a braking mechanism independently of the feeding mechanism. The installation of a fresh supply of netting material need only be threaded through the feeding mechanism for proper installation thereof.

In summary, the invention thus provides an interacting driving and cutting mechanism for applying the wrapping material to the completed cylindrical bale without providing any additional mechanism through which the wrapping material must be threaded and for severing the wrapping material without imparting energy into the wrapping material to effect the severing thereof.

The advantages of this invention will become apparent upon consideration of the following disclosure of this invention, especially when taken in conjunction with the accompanying drawings wherein:
Fig. 1 is a side elevational view of a round baler incorporating the principles of the instant invention, portions of the round baler being broken away to better show the invention;
Fig. 2 is a partial front elevational view of the round baler corresponding to lines II-II of Fig. 1, portions of the central part of the round baler being broken away for purposes of clarity;
Fig. 3 is an enlarged detail view corresponding lines III-III of Fig. 2 and showing the drive mechanism for the net dispensing apparatus;
Fig. 4 is an enlarged detail view similar to that of Fig. 3 but showing the movement of a tensioning pulley from a declutch position illustrated in phantom into an engagement position with the drive belt illustrated in full lines;
Fig. 5 is a view similar to that of Fig. 4 but showing the tensioning pulley fully engaged with the drive belt; the movement of an actuation member fixed to a knife pivot shaft being shown in phantom and the movement of the netting material into the bale forming mechanism being sequentially shown in broken lines;
Fig. 6 is a view similar to that of Fig. 5 but showing the tensioning pulley being moved from its drive position toward the declutch position;
Fig. 7 is a view similar to that of Fig. 6 but showing a further movement of the tensioning pulley to pivotally rotate the cutting knife into its cutting position and a locking arm into engagement with the feed roller to effect a severing of the netting material;
Fig. 8 is a cross-sectional view through the knife assembly corresponding to lines VIII-VIII of Fig. 2; the movement of the cutting knife into its cutting position to sever the netting material being shown in phantom and the movement of the netting material being sequentially shown in broken lines; and
Fig. 9 is a schematic partial side elevational view of the net dispensing apparatus utilized on the Claas Model Rollant 44 round baler which is prior art to the instant invention.

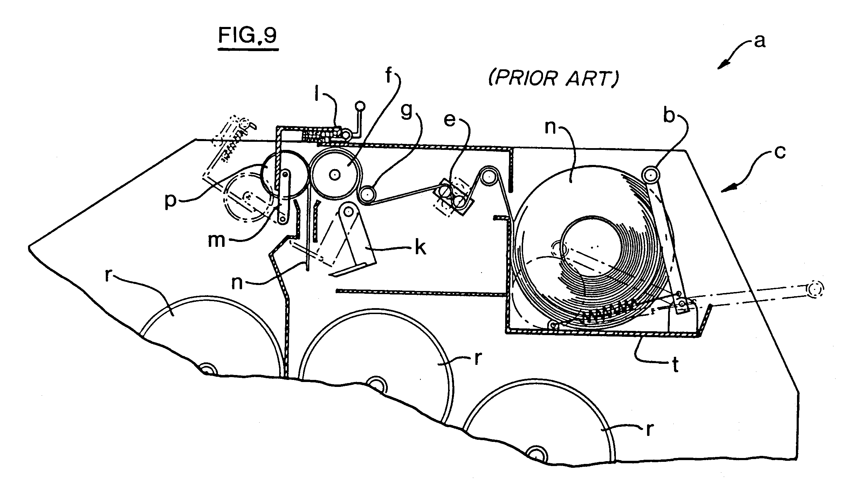

Referring first to Fig. 9, the Claas prior art net dispensing apparatus referred to above will be described now in greater detail. The round baler (a) is of the fixed chamber type with a plurality of rollers (r) journalled between opposing side sheets to form a chamber therebetween in which the cylindrical bale is formed. The net dispensing apparatus (c) includes a tray (t) in which a roll of netting material (n) is disposed. A braking bar (b) held into position by an overcenter spring retains the roll of netting material (n) in position in the tray (t). The netting material is threaded through a pivotable braking apparatus (e), under a guide roller (g), around the feed roller (f) and between a pinch roller (p) and the feed roller (f). A swinging knife (k) is movable to engage the net between the feed roller (f) and the cylindrical bale to sever the net when a sufficient amount of net has been wrapped around the bale. The pinch roller (p) is mounted on pivot arms (m) equipped with a latching mechanism (l) to fixedly secure the pinch roller (p) against and into engagement with the feed roller (f).

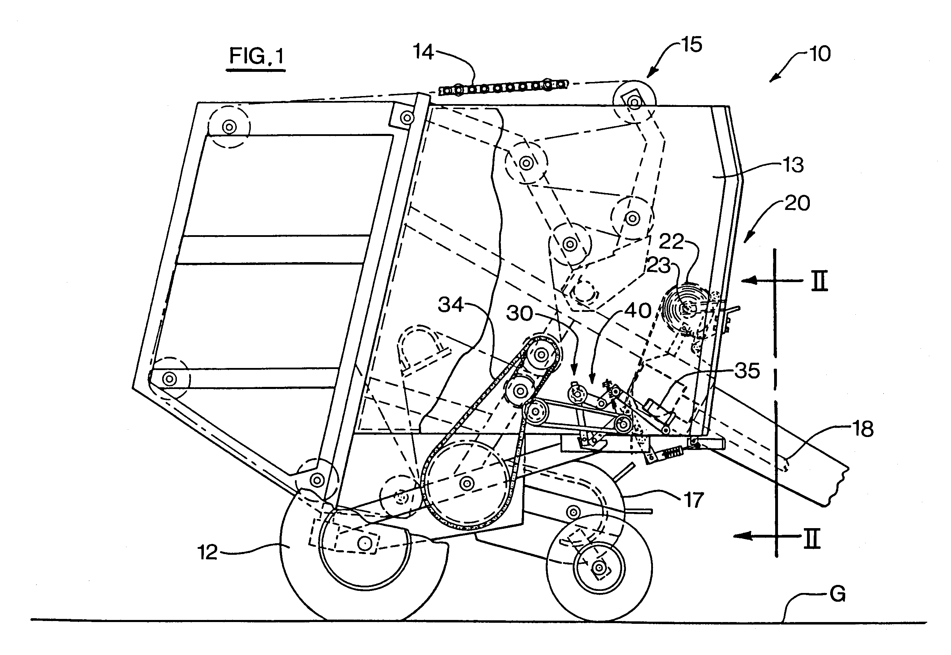

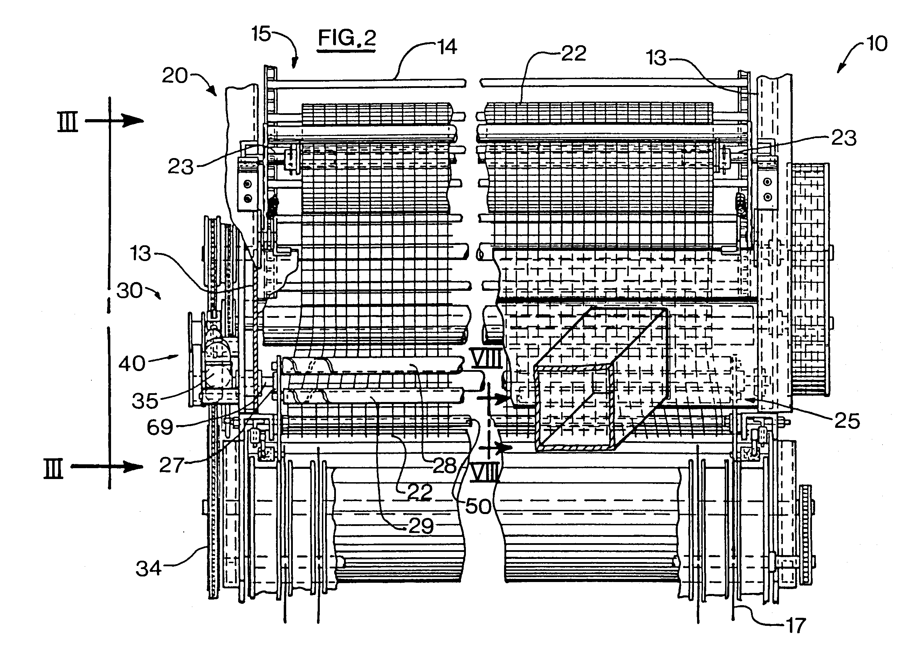

Referring now to Figs. 1 and 2, side and front elevational views of a round baler incorporating the principles of the instant invention can be seen. Any left and right references are determined by standing at the rear of the machine and facing in the direction of operative travel. Also, terms such as "left", "right", "forward", "rearward", "transverse" etc... are words of convenience and are not to be construed as limiting terms.

The round baler 10 is provided with a wheeled frame 12 and is adapted for movement over the ground G. The frame 12 supports a pair of generally vertical, transversely spaced apart side sheets 13 between which a chain and slat apron 14 is rotatably driven to form the bale forming mechanism 15 within which cylindrical bales of crop material are formed. A pickup 17 positioned adjacent the ground G delivers crop material from the ground G into the bale forming mechanism 15 in a conventional manner. A drive train 18 provides operational power to all the operable components within the round baler 10. This round baler 10, as described above, is of generally conventional construction and operation and is described in greater detail in US-A-4.426.833, the descriptive portion of which is incorporated herein by reference.

With further reference to Figures 1-3, the round baler 10, however, has been modified to be equipped with a net dispensing apparatus 20. A roll of netting material 22 is mounted on a spindle 23 and rotatably journalled between the opposing side sheets 13 at a forward position of the round baler 10. The netting material 22 is threaded downwardly from the roll to a feeding mechanism 25 in the form of a feed roller 27 and first and second pinch rollers 28, 29. The net dispensing apparatus 20 also includes a pivoted knife assembly 50 used to sever the netting material 22 after a sufficient amount has been applied to the outer surface of the cylindrical bale, a drive mechanism 30 for operably powering the feed roll 27, and an actuating mechanism 35 for selectively engaging the drive mechanism 30 to effect a feeding of the netting material 22 into the bale forming mechanism 15. A more detailed description of the feeding mechanism 25, namely, the feed roller 27 and the pinch rollers 28, 29, can be found in EP-A-0.289.092, the descriptive portion of which is incorporated herein by reference.

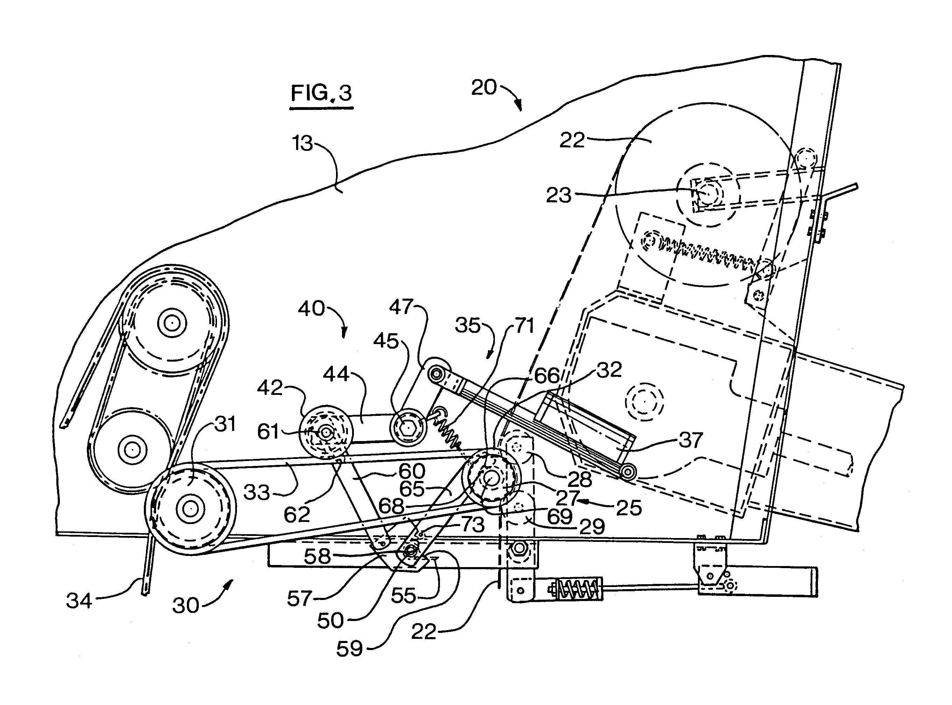

Referring now to Figs. 3-7, the structure and operation of the drive mechanism 30 and actuating mechanism 35 can best be seen. The drive mechanism 30 includes a drive belt 33 entrained around a drive pulley 31 and a driven pulley 32 affixed to the feed roller 27. The drive pulley 31 is constantly driven from the drive assembly 34 forming a part of the main drive train 18. Because of lack of tension in the drive belt 33, no driving power is transferred to the driven pulley 32 and the feed roller 27 is not rotated.

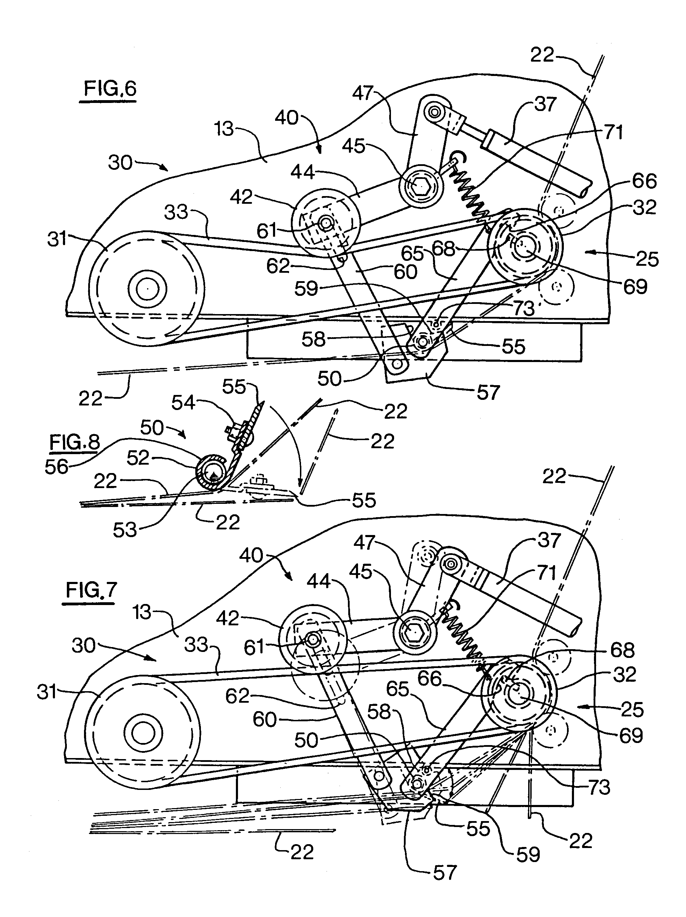

A tensioning mechanism 40 positioned for engagement with the drive belt 33 includes a tensioning pulley 42 rotatably mounted on a pivot arm 44 which is pivotally movable about the pivot 45 affixed to one side sheet 13 of the round baler 10. A lever arm 47 of the tensioning mechanism 40 is connected to the actuating mechanism 35 in the form of an electrically driven actuator 37 to effect pivotal movement of the tensioning mechanism 40. As shown with particular reference to Figs. 3, 4 and 5, the actuator 37 is operable to move the tensioning pulley 42 from a declutch position shown in Fig. 3 into a drive position shown in Fig. 5. This drive position induces tension into the drive belt 33 and effects a transfer of rotational power from the drive pulley 31 to the driven pulley 32 to effect the rotation of the feed roller 27.

Referring now to Figs. 3-8, it can be seen that the knife assembly 50 includes a knife holder 52 affixed to a pivot shaft 53 and carrying a detachable cutting knife 55 by means of bolts 54. The knife holder 52 has a curved portion 56 wrapped concentrically around the pivot shaft 53. Also, attached to the pivot shaft 53 for rotation with the knife assembly 50 is an actuation member 57, which is of a shape to incorporate a first engagement surface 58 and a second engagement surface 59, the purpose of which will be described in greater detail below.

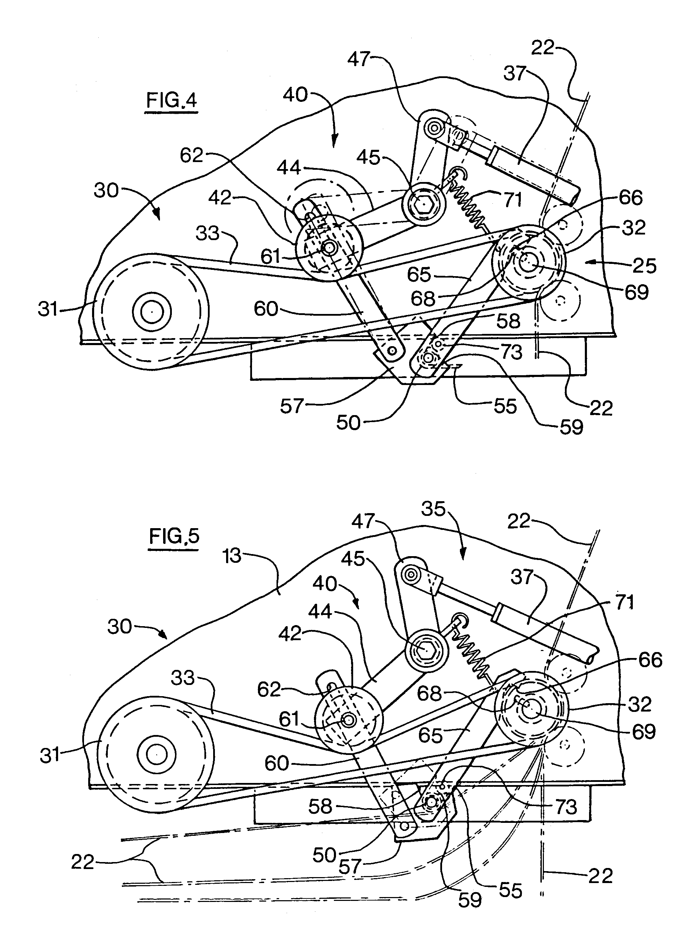

A connecting link 60 interconnects the tensioning mechanism 40 and the actuation member 57 to transfer synchronized motion from the tensioning mechanism 40 to the actuation member 57 and attached knife assembly 50. The connecting link 60 is formed with a slotted opening 62 through which extends the shaft 61 which mounts the tensioning pulley 42 to the pivot arm 44. The slotted opening 62 serves as a lost motion device and permits the tensioning pulley 42 to move into engagement with the drive belt 33 to a limited extent without effecting movement of the knife assembly 50. As best seen in Fig. 4, the actuator 37 pivotally moves the tensioning pulley 42 into engagement with the drive belt 33 and, as a result, the shaft 61 mounting the tensioning pulley 42 moves from the top of the slotted opening 62 to the bottom of the slotted opening 62 without effecting movement of the actuation member 57. Subsequent movement of the tensioning mechanism 40 is depicted in Fig. 5 and causes full engagement of the drive belt 33 by the tensioning pulley 42 and assures a retraction of the knife assembly 50 out of its cutting position.

This retracted position of the knife assembly 50 is best shown in Fig. 8 where it can be seen that the netting material 22 rides on the curved portion 56 of the knife holder 52 while being fed into the bale forming mechanism 15 and while out of engagement with the cutting knife 55. After sufficient netting material has been applied to the cylindrical bale, the actuator 37 retracts the tensioning mechanism 40 so that the tensioning pulley 42 relieves the tension on the drive belt 33 to terminate the transfer of rotational power to the driven pulley 32. The shaft 61 carrying the tensioning pulley 42 has now moved to the top of the slotted opening 62 in the connecting link 60 with no motion having been induced into the knife assembly 50. Subsequent motion of the tensioning mechanism 40 to a fully declutch position, as best seen in Fig. 7, induces a rotation of the actuation member 57 and attached knife assembly 50 to move the cutting knife 55 into a cutting position, as best seen in Figs. 7 and 8, to effect a severing of the netting material 22, as demonstrated in Fig. 8.

The drive mechanism 30 is also provided with a lockout arm 65 pivotally mounted on the pivot shaft 53 of the knife assembly 50 but movable independently thereof. The lockout arm 65 includes a notch 66 positionable for engagement with a key 68 fixed to the shaft 69 of the feed roller 27. When the lockout arm 65 is engaged with the key 68, the feed roller 27 is prevented from further rotation. The lockout arm 65 is biased away from the feed roller 27 by a spring 71. The lockout arm 65 is also provided with an outwardly extending pin 73 located proximate to the actuation member 57 for engagement with the first and second engagement surfaces 58, 59. As can be seen with reference to Figs. 3-7, a rotation of the actuation member 57 to engage the first engagement surface 58 with the pin 73 forces the lockout arm 65 into engagement with the key 68 on the shaft 69. The second engagement surface 59 is provided on the actuation member 57 to assure that the lockout arm 65 becomes disengaged from the feed roll shaft 69 in case the spring 71 is incapable of urging the lockout arm 65 away from the shaft 69 when the tensioning pulley 42 is moved into a drive position, as demonstrated in Fig. 5. Accordingly, when the tensioning pulley 42 is fully engaged with the drive belt 33, the shaft 69 is freed from the lockout arm 65 and is permitted to rotate and thereby feed the netting material 22 into the bale forming mechanism 15.

To summarize the operation of the drive mechanism 30, during the bale formation process of the round baler 10, the net dispensing apparatus 20 remains inactive even though the drive pulley 31 is continuously rotated by the drive assembly 34. Once the cylindrical bale has reached the desired size, the net dispensing apparatus 20 is selectively actuated by engaging the electric actuator 37 to pivotally move the tensioning pulley 42 into engagement with the drive belt 33. Movement of the tensioning pulley 42 into its full driving position, as shown in Fig. 5, causes a synchronized movement of the actuation member 57 and attached knife assembly 50 to retract the cutting knife 55 out of the path of the netting material 22 as shown in Fig. 8. The movement of the actuation member 57 can also cause engagement of the second engagement surface 59 with the pin 73 on the lockout arm 65 to ensure that the lockout arm 65 has disengaged from the key 68 on the feed roller shaft 69 to permit the feed roller 27 to rotate.

The rotation of the feed roller 27 causes a supply of netting material 22 to enter into the bale forming mechanism 15 wherein it is wrapped around the exterior surface of the cylindrical bale. Once a sufficient amount of netting material 22 has been applied to the cylindrical bale, the electrical actuator 37 is reversed and the tensioning pulley 42 is moved toward the declutch position, relieving the tension in the drive belt 33 and terminating the driving of the feed roller 27. Movement of the tension pulley 42 into its fully declutched position also effects a synchronized movement of the actuation member 57 to rotate the cutting knife into the path of the netting material 22 and to cause an engagement of the first engagement surface 58 with the pin 73 of the lockout arm 65 thereby forcing the lockout arm 65 into engagement with the key 68 on the feed roller shaft 69 and preventing rotation of the feed roller 27.

Since the source of supply of netting material 22 has been halted and since the cylindrical bale continues to be rotated by the bale forming mechanism 15, tension is induced into the netting material between the cylindrical bale and the feed roller 27. Hence, the mere rotation of the cutting knife 55 into the path of the netting material 22 is sufficient to cause a parting of the netting material and thereby halt the net dispensing procedure. By rotating the knife assembly 50 radially with respect to the pivot axis 53, instead of tangentially as taught by the Claas prior art mechanism, the knife assembly 50 does not have to impart significant impact energy into the netting material 22 to effect severing. As best seen in Fig. 8, the netting material 22 rides over the curved portion 56 of the knife holder 52 while being fed into the bale forming mechanism 15. Once the knife member 55 has rotated about the pivot shaft 53 and into the netting material 22, the netting material 22 forms an angle around the cutting edge of the knife member 55 with a portion of the netting material 22 extending generally parallel to the knife member 55 as it is being severed.

It will be understood that changes in the details, which have been described and ilustrated to explain the nature of the invention, will occur to and may be made by those skilled in the art upon a reading of this disclosure.

As an example, it will be appreciated that the lockout arm pin 73 can be dispensed with in as much as the first and second engagement surfaces 58 and 59 of the actuation member 57 may be disposed to engage directly with the lockout arm 65. Similarly also the second engagement surface 59 may be dispensed with in as much as the spring 71 normally always should be able to move the lockout arm 65 toward the unlocking position when the knife assembly 50 is moved to the retracted position and the tension pulley 42 is moved to the drive engaging position.

Similarly the lost motion device formed by the elongated slot 62 in the link 60 and the shaft 61 of the tension pulley 42 cooperating therewith may be realized in a number of ways which are different from the solution as shown in the drawings and described hereabove.

It also will be appreciated that, while the above description has been directed mainly to a dispensing mechanism for wrapping netting material around bales, the same mechanism also can be utilized for wrapping bales with any other type of wrapping material, such as plastic film for example.

## Claims

1. A round baler (10) having wrapper means (20) comprising:
- a feeding mechanism (25) for selectively dispensing wrapping material (22) from a wrapping material supply source into the bale forming chamber of the baler (10) for wrapping a finished bale in said chamber therewith;
- drive means (30) for selectively powering the feeding mechanism (25); and
- a knife assembly (50) for severing said wrapping material (22) after a sufficient amount thereof has been wrapped around said bale; said knife assembly (50) including a knife holder (52) with a knife member (55) having a cutting edge attached thereto and being rotatably movable about a pivot axis (53) between, on the one hand, a retracted, inoperative position wherein the knife holder (52) engages the wrapping material (22) in a manner so that the path thereof from the feeding mechanism (25) to the bale chamber extends clear of the knife member cutting edge and determines a first angle around said knife holder (52) and, on the other hand, a cutting position in which the knife member cutting edge engages the wrapping material (22) to effect said severing thereof; the arrangement being such that, at the moment of said severing action, the path of said wrapping material (22) from the feeding mechanism (25) to the bale chamber determines a second angle around said edge which is smaller than said first angle;
said baler (10) being characterized in that :
- the wrapper means (20) also include locking means (65) which operably extend between the knife assembly (50) and the feeding mechanism (25) in a manner so that said knife assembly (50) controls the operation of said locking means (65) for selectively locking the feeding mechanism (25) in a stationary position; the arrangement being such that, on the one hand, said locking means (65) are in a retracted, inoperative position when the knife assembly (50) itself also is in its own retracted, inoperative position and, on the other hand, movement of the knife assembly (50) from its retracted, inoperative position to its cutting position causes the locking means (65) to lock the feeding mechanism (25) in said stationary position whereby further dispensing movement of this feeding mechanism (25) is prevented so that the tensile force exerted by subsequent, continued wrapping of a finished bale with wrapping material (22) in the bale chamber, is operable to effect said severing of said wrapping material (22) along said knife member cutting edge.

2. A baler (10) according to claim 1 characterized in that, in the cutting position of the knife assembly (50), the knife member (55) thereof, on the one hand, is positioned generally parallel to the portion of the wrapping material (22) which, prior to being severed, extends from the knife member cutting edge to the bale chamber and, on the other hand, has its cutting edge facing in the direction generally opposite to the direction of movement of the wrapping material (22) away from this edge and toward said bale chamber.

3. A baler (10) according to claim 1 or 2 characterized in that :
- on the one hand, the knife holder (52) has a curved portion (56) which is concentric with the pivot axis (53) and which, in the retracted, inoperative position of the knife assembly (50), is disposed to engage with the wrapping material (22) extending from the feeding mechanism (25) to the bale chamber, and
- on the other hand, the knife member (55) is oriented generally radially relative to the pivot axis (53).

4. A baler (10) according to any of the preceding claims characterized in that the drive means (30) include drive engagement means (40) for selectively operably powering the feeding mechanism (25); said drive engagement means (40) being interconnected with the knife assembly (50) in a manner so that actuation of the drive engagement means (40) for operating the feeding mechanism (25) also causes movement of the knife assembly (50) toward its retracted, inoperative position.

5. A baler (10) according to claim 4 characterized in that the drive engagement means (40) are connected to the knife assembly (50) by connecting linkage means (60) including a lost motion device (61, 62) to permit limited movement of the drive engagement means (40) without causing movement of the knife assembly (50).

6. A baler (10) according to claim 4 or 5 characterized in that :
- the drive means (30) further also include a drive belt (33) entrained around a driven pulley (32) connected to the feeding mechanism (25) and a drive pulley (31) which, in use of the baler (10), constantly rotatably is driven by the main drive means (34) of said bale (10); and
- the drive engagement means (40) include a tensioning pulley (42) rotatably supported on a pivot arm (44) pivotally mounted on the baler frame (12, 13) and positionable to cause the tensioning pulley (42) to effect driving engagement of the drive belt (33) with the drive and driven pulleys (31, 32) for transmitting driving power to the feeding mechanism (25); said drive engagement means (40) further also including a linear actuator (37) connected to the pivot arm (44) for selectively moving the tensioning pulley (42) into and out of engagement with the drive belt (33).

7. A baler (10) according to claim 6 when appended to claim 5, characterized in that :
- the knife assembly (50) comprises an actuation member (57) fixedly secured to a pivot shaft (53) thereof coinciding with the knife assembly pivot axis;
- the connecting linkage means (60) are operatively associated with the actuation member (57) such that movement of the tensioning pulley (42) can cause pivotal movement of the actuation member (57) and the knife assembly (50) attached thereto; and
- the locking means (65) also are operatively associated with the actuation member (57) such that the locking means (65) are moved to their locking position when the knife assembly (50) is moved to the cutting position.

8. A baler (10) according to claim 7, characterized in that:
- the connecting linkage means comprise a link (60) which is pivotally connected at one end to the actuation member (57) at a distance from the pivot shaft (53) of the knife assembly (50); and
- the lost motion device is formed by a coupling between the other end of the link (60) and the drive engagement means (40) and comprises pin means (61) received in an elongated slot (62) for movement along the length thereof.

9. A baler (10) according to claim 7 or 8 characterized in that :
- the locking means comprise a locking arm (65) which is pivotally mounted about the knife assembly pivot shaft (53) and is movable independently of the knife assembly (50) and the actuation member (57) attached thereto; said locking arm (65) being engageable with a key (68) fixed to a shaft (69) of the feeding mechanism (25) in a manner to prevent rotation of said shaft (69); and
- the actuation member (57) has an engagement surface (58) positioned for engagement with the locking arm (65) for urging said locking arm (65) into engagement with said key (68) when the actuation member (57) is moved to displace the knife assembly (50) to its cutting position; said locking arm (65) being biased out of engagement with said key (68) by a spring (71) when the actuation member (57) is moved to displace the knife assembly (50) to its retracted, inoperative position.

10. A baler (10) according to claim 7 or 8 characterized in that :
- the locking means comprise a locking arm (65) which is pivotally mounted about the knife assembly pivot shaft (53) and is movable independently of the knife assembly (50) and the actuation member (57) attached thereto; said locking arm (65) being engageable with a key (68) fixed to a shaft (69) of the feeding mechanism (25) in a manner to prevent rotation of said shaft (69); and
- the actuation member (57) has first and second engagement surfaces (58, 59) positioned for engagement with the locking arm (65) such that pivotal movement of the actuation member (57) causes one of said engagement surfaces (58, 59) to engage the locking arm (65) to cause pivotal movement thereof about its pivotal mounting (53); said locking arm (65) being urged into engagement with said key (68) when the knife assembly (50) is moved into its cutting position and out of engagement with said key (68) when the knife assembly (50) is moved into its retracted position.

11. A baler (10) according to claim 9 or 10, characterized in that the or each engagement surface (58, 59) is positioned for engagement with a pin (73) affixed to the locking arm (65).

12. A baler (10) according to claim 10 or 11, characterized in that the second engagement surface (59) is positioned such that, upon pivotal movement of the actuation member (57) to move the knife assembly (50) from the cutting position toward the retracted position, it engages the locking arm (65), respectively the locking arm pin (73) to move said locking arm (65) to its unlocking position only after the knife assembly (50) has moved an initial distance toward its retracted position.

13. A baler (10) according to any of the claims 10 to 12, characterized in that the locking arm (65) is biased out of engagement with said key (68) by a spring (71).

## Patentansprüche

1. Rundballenpresse (10) mit Umwicklungseinrichtungen (20), die folgende Teile umfassen:
- einen Zuführungsmechanismus (25) zum selektiven Abgeben von Wickelmaterial (22) von einer Wickelmaterial-Vorratsquelle in die Ballenformungskammer der Ballenpresse (10), um damit einen fertiggestellten Ballen in der Kammer zu umwickeln,
- Antriebseinrichtungen (30) zum selektiven Kraftantrieb des Zuführungsmechanismus (25) und
- eine Messerbaugruppe (50) zum Durchtrennen des Wickelmaterials (22), nachdem eine ausreichende Menge hiervon um den Ballen gewickelt wurde, wobei die Messerbaugruppe (50) einen Messerhalter (52) mit einem daran befestigten, eine Schneidkante aufweisenden Messerbauteil (55) einschließt und drehbar um eine Schwenkachse (53) zwischen einerseits einer zurückgezogenen Ruhestellung, in der der Messerhalter (52) mit dem Wickelmaterial (22) in einer derartigen Weise in Eingriff steht, daß sich dessen Bahn von dem Zuführungsmechanismus (25) zur Ballenkammer von der Schneidkante des Messerbauteils entfernt erstreckt und einen ersten Winkel um den Messerhalter (52) herum bestimmt, und andererseits einer Schneidstellung beweglich ist, in der die Schneidkante des Messerbauteils mit dem Wickelmaterial 22 in Eingriff kommt, um dessen Durchtrennung zu bewirken, wobei die Anordnung derart ist, daß zum Zeitpunkt des Durchtrennungsvorganges die Bahn des Wickelmaterials (22) von dem Zuführungsmechanismus (25) zur Ballenkammer einen zweiten Winkel um die Kante bestimmt, die kleiner als der erste Winkel ist, und wobei die Ballenpresse (10) dadurch gekennzeichnet ist, daß:
- die Wickeleinrichtungen (20) weiterhin Verriegelungseinrichtungen (65) einschließen, die sich betriebsmäßig zwischen der Messerbaugruppe (50) und dem Zuführungsmechanismus (25) in einer derartigen Weise erstrecken, daß die Messerbaugruppe (50) die Betriebsweise der Verriegelungseinrichtungen (65) steuert, um selektiv den Zuführungsmechanismus (50) in einer stationären Position zu verriegeln, wobei die Anordnung derart ist, daß sich einerseits die Verriegelungseinrichtungen (65) in einer zurückgezogenen Ruhestellung befinden, wenn die Messerbaugruppe (50) sich selbst ebenfalls in ihrer eigenen zurückgezogenen Ruhestellung befindet, und andererseits eine Bewegung der Messerbaugruppe (50) aus ihrer zurückgezogenen Ruhestellung in die Schneidstellung bewirkt, daß die Verriegelungseinrichtungen (65) den Zuführungsmechanismus (25) in der stationären Position verriegeln, so daß eine weitere Abgabebewegung dieses Zuführungsmechanismus (25) verhindert wird, so daß die Zugkraft, die durch das nachfolgende fortgesetzte Umwickeln eines fertiggestellten Ballens mit dem Wickelmaterial (22) in der Ballenkammer hervorgerufen wird, das Durchtrennen des Wickelmaterials (22) entlang der Schneidkante des Messerbauteils bewirkt.

2. Ballenpresse (10) nach Anspruch 1,
dadurch **gekennzeichnet,** daß in der Schneidstellung der Messerbaugruppe (50) deren Messerbauteil (55) einerseits allgemein parallel zu dem Teil des Wickelmaterials (22) angeordnet ist, der sich vor dem Durchtrennen von der Schneidkante des Messerbauteils zur Ballenkammer erstreckt, und andererseits mit seiner Schneidkante in die Richtung allgemein entgegengesetzt zur Bewegungsrichtung des Wickelmaterials (22) von dieser Kante fort und in Richtung auf die Ballenkammer gerichtet ist.

3. Ballenpresse (10) nach Anspruch 1 oder 2,
dadurch **gekennzeichnet,** daß:
- einerseits der Messerhalter (52) einen gekrümmten Abschnitt (56) aufweist, der konzentrisch zur Schwenkachse (53) ist und der in der zurückgezogenen Ruhestellung der Messerbaugruppe (50) so angeordnet ist, daß er mit dem Wickelmaterial (22) in Eingriff steht, das sich von dem Zuführungsmechanismus (25) zur Ballenkammer erstreckt, und
- andererseits das Messerbauteil (55) allgemein radial bezüglich der Schwenkachse (53) ausgerichtet ist.

4. Ballenpresse (10) nach einem der vorhergehenden Ansprüche,
dadurch **gekennzeichnet,** daß die Antriebseinrichtungen (30) Antriebs-Kupplungseinrichtungen (40) zum selektiven betriebsmäßigen Kraftantrieb des Zuführungsmechanismus (25) einschließen, wobei die Antriebs-Kupplungseinrichtungen (40) mit der Messerbaugruppe (50) in einer derartigen Weise verbunden sind, daß eine Betätigung der Antriebs-Kupplungseinrichtungen (40) zum Betrieb des Zuführungsmechanismus (25) gleichzeitig eine Bewegung der Messerbaugruppe (50) in ihre zurückgezogene Ruhestellung bewirkt.

5. Ballenpresse (10) nach Anspruch 4,
dadurch **gekennzeichnet,** daß die Antriebs-Kupplungseinrichtungen (40) mit der Messerbaugruppe (40) durch Verbindungsgestängeeinrichtungen (60) verbunden sind, die eine Totgangeinrichtung (61,62) einschließen, um eine begrenzte Bewegung der Antriebs-Kupplungseinrichtungen (40) zuzulassen, ohne daß eine Bewegung der Messerbaugruppe (50) hervorgerufen wird.

6. Ballenpresse (10) nach Anspruch 4 oder 5,
dadurch **gekennzeichnet,** daß:
- die Antriebseinrichtungen (30) weiterhin einen Antriebsriemen (33) einschließen, der um eine mit dem Zuführungsmechanismus (25) verbundene angetriebene Riemenscheibe (32) und eine Antriebsriemenscheibe (31) gelegt ist, die im Betrieb der Ballenpresse (10) dauernd durch die Hauptantriebs-Einrichtungen (34) der Ballenpresse (10) in Drehung angetrieben ist, und
- die Antriebs-Kupplungseinrichtungen (40) eine Spannriemenscheibe (42) einschließen, die drehbar auf einem Schwenkarm (44) gehaltert ist, der drehbar auf dem Ballenpressenrahmen (12,13) befestigt und so einstellbar ist, daß die Spannriemenscheibe (42) einen Antriebseingriff des Antriebsriemens (32) mit der Antriebsriemenscheibe und der angetriebenen Riemenscheibe (31,32) hervorruft, um Antriebskraft auf den Zuführungsmechanismus (25) zu übertragen, wobei die Antriebs-Kupplungseinrichtungen (40) weiterhin ein Linear-Stellglied (37) einschließen, das mit dem Schwenkarm (44) verbunden ist, um selektiv die Spannriemenscheibe (42) in und außer Eingriff mit dem Antriebsriemen (33) zu bewegen.

7. Ballenpresse (10) nach Anspruch 6 unter Rückbeziehung auf Anspruch 5,
dadurch **gekennzeichnet,** daß:
- die Messerbaugruppe (50) ein Betätigungsteil (57) umfaßt, das fest an einer Schwenkachse (53) befestigt ist, die mit der Schwenkachse der Messerbaugruppe zusammenfällt,
- die Verbindungsgestängeeinrichtungen (60) betriebsmäßig mit dem Betätigungsteil (57) derart verbunden sind, daß eine Bewegung der Spannriemenscheibe (42) eine Schwenkbewegung des Betätigungsteils (57) und der daran befestigten Messerbaugruppe (50) hervorrufen kann, und
- die Verriegelungseinrichtungen (65) ebenfalls betriebsmäßig mit dem Betätigungsteil (57) derart verbunden sind, daß die Verriegelungseinrichtungen (65) in ihre Verriegelungsposition bewegt werden, wenn die Messerbaugruppe (50) in die Schneidstellung bewegt wird.

8. Ballenpresse (10) nach Anspruch 7,
dadurch **gekennzeichnet,** daß:
- die Verbindungsgestängeeinrichtungen ein Gestänge (60) umfassen, das an einem Ende schwenkbar mit dem Betätigungsteil (57) in einer Entfernung von der Schwenkwelle (53) der Messerbaugruppe (50) verbunden ist, und
- die Totgangeinrichtung durch eine Kupplung zwischen dem anderen Ende des Gestänges (60) und den Antriebs-Kupplungseinrichtungen (40) gebildet ist und Stifteinrichtungen (61) umfaßt, die in einem langgestreckten Schlitz (62) zur Bewegung entlang dessen Länge aufgenommen sind.

9. Ballenpresse (10) nach Anspruch 7 oder 8,
dadurch **gekennzeichnet,** daß:
- die Verriegelungseinrichtungen einen Verriegelungsarm (65) umfassen, der schwenkbar um die Schwenkachse (52) der Messerbaugruppe befestigt und unabhängig von der Messerbaugruppe (50) und dem daran befestigten Betätigungsteil (57) beweglich ist, daß der Verriegelungsarm (65) mit einem an einer Welle (69) des Zuführungsmechanismus (25) befestigten Keil derart in Eingriff bringbar ist, daß eine Drehung der Welle (69) verhindert wird, und
- das Betätigungsteil (57) eine Eingriffsoberfläche (58) aufweist, die für einen Eingriff mit dem Verriegelungsarm (65) angeordnet ist, um den Verriegelungsarm (65) in Eingriff mit dem Keil (58) zu drücken, wenn das Betätigungsteil (57) bewegt wird, um die Messerbaugruppe (50) in die Schneidstellung zu bewegen, wobei der Verriegelungsarm (65) durch eine Feder (71) außer Eingriff mit dem Keil (68) vorgespannt ist, wenn das Betätigungsteil (57) zur Bewegung der Messerbaugruppe (50) in ihre zurückgezogene Ruhestellung bewegt wird.

10. Ballenpresse (10) nach Anspruch 7 oder 8,
dadurch **gekennzeichnet,** daß:
- die Verriegelungseinrichtungen einen Verriegelungsarm (65) umfassen, der schwenkbar um die Schwenkachse (53) der Messerbaugruppe befestigt und unabhängig von der Messerbaugruppe (50) und dem daran befestigten Betätigungsteil (57) beweglich ist, wobei der Verriegelungsarm (65) mit einem an einer Welle (69) des Zuführungsmechanismus (50) befestigten Keil derart in Eingriff bringbar ist, daß eine Drehung der Welle (69) verhindert wird, und
- das Betätigungsteil (57) erste und zweite Eingriffsoberflächen (58,59) aufweist, die für einen Eingriff mit dem Verriegelungsarm (65) derart angeordnet sind, daß eine Schwenkbewegung des Betätigungsteils (57) bewirkt, daß eine der Eingriffsoberflächen (58,59) mit dem Verriegelungsarm (65) in Eingriff kommt, um dessen Schwenkbewegung um seine Schwenkbefestigung (53) hervorzurufen, wobei der Verriegelungsarm (65) bei einer Bewegung der Messerbaugruppe (50) in ihre Schneidstellung in Eingriff mit dem Keil (68) und außer Eingriff mit dem Keil (68) gedrückt wird, wenn die Messerbaugruppe (50) in ihre zurückgezogene Stellung bewegt wird.

11. Ballenpresse (10) nach Anspruch 9 oder 10,
dadurch **gekennzeichnet,** daß die oder jede Eingriffsoberfläche (58,59) für einen Eingriff mit einem Stift (73) angeordnet ist, der an dem Verriegelungsarm (65) befestigt ist.

12. Ballenpresse (10) nach Anspruch 10 oder 11,
dadurch **gekennzeichnet,** daß die zweite Eingriffsoberfläche (59) derart angeordnet ist, daß sie bei einer Schwenkbewegung des Betätigungsteils (57) zur Bewegung der Messerbaugruppe (50) von der Schneidstellung in die zurückgezogene Stellung mit dem Verriegelungsarm (65) bzw. dem Verriegelungsarm-Stift (73) in Eingriff kommt, um den Verriegelungsarm erst dann in die Entriegelungsstellung zu bewegen, nachdem die Messerbaugruppe (50) sich über eine Anfangsstrecke in Richtung auf die zurückgezogene Stellung bewegt hat.

13. Ballenpresse (10) nach einem der Ansprüche 10 - 12,
dadurch **gekennzeichnet,** daß der Verriegelungsarm (65) durch eine Feder (71) außer Eingriff mit dem Keil (68) vorgespannt ist.

## Revendications

1. Ramasseuse-presse à balles rondes (1) équipée de moyens d'enveloppement (20) comportant :
- un mécanisme d'alimentation (25) destiné à délivrer sélectivement dans la chambre de formage de balles de la ramasseuse-presse (10) un matériau d'enveloppement (22) à partir d'une source d'alimentation de matériau d'enveloppement, afin d'envelopper avec celui-ci une balle finie dans ladite chambre;
- des moyens d'entraînement (30) pour commander sélectivement la mécanisme d'alimentation (25); et
- un ensemble formant couteau (50) pour séparer ledit matériau d'enveloppement (22) après qu'une quantité suffisante de celui-ci a été enroulée autour de ladite balle; ledit ensemble formant couteau (50) comportant un porte-couteau (52) pourvu d'un organe formant couteau (55) qui possède un bord de coupe fixé à lui et qui est mobile en rotation autour d'un axe de pivotement (53) entre, d'une part, une position inactive rétractée dans laquelle le porte-couteau (52) vient en contact avec le matériau d'enveloppement (22) de façon que la trajectoire de celui-ci du mécanisme d'alimentation (25) à la chambre à balles s'étende à distance du bord de coupe de l'organe formant couteau et détermine un premier angle autour dudit porte-couteau (52), et, d'autre part, une position de coupe dans laquelle le bord de coupe de l'organe formant couteau vient en contact avec le matériau d'enveloppement (22) pour effectuer ladite séparation de celui-ci; la conception étant telle qu'au moment de ladite opération de séparation, la trajectoire dudit matériau d'enveloppement (22) du mécanisme d'alimentation (25) à la chambre à balles détermine autour dudit bord un second angle inférieur audit premier angle;
ladite ramasseuse-presse (10) étant caractérisée en ce que :
- les moyens d'enveloppement (20) comportent également des moyens de verrouillage (65) qui s'étendent d'une manière fonctionnelle entre l'ensemble formant couteau (50) et le mécanisme d'alimentation (25) de façon que ledit ensemble formant couteau (50) commande le fonctionnement desdits moyens de verrouillage (65) pour sélectivement verrouiller le mécanisme d'alimentation (25) dans une position fixe; la conception étant telle que, d'une part, lesdits moyens de verrouillage (65) sont dans une position inactive rétractée, lorsque l'ensemble formant couteau (50) est lui-même aussi dans sa propre position inactive rétractée, et, d'autre part, un déplacement de l'ensemble formant couteau (50) de sa position inactive rétractée dans sa position de coupe oblige les moyens de verrouillage (65) à verrouiller le mécanisme d'alimentation (25) dans ladite position fixe pour ainsi empêcher un mouvement de distribution supplémentaire de ce mécanisme d'alimentation (25), afin que la force de traction exercée par une continuation ultérieure de l'enveloppement d'une balle finie avec le matériau d'enveloppement (22) dans la chambre à balles, puisse agir pour effectuer ladite séparation dudit matériau d'enveloppement (22) le long dudit bord de coupe de l'organe formant couteau.

2. Ramasseuse-presse (10) selon la revendication 1, caractérisée en ce que, dans la position de coupe de l'ensemble formant couteau (50), l'organe formant couteau (55) de celui-ci, d'une part, est positionné sensiblement parallèlement à la partie du matériau d'enveloppement (22) qui, avant d'être séparée, s'étend du bord de coupe de l'organe formant couteau à la chambre à balles, et, d'autre part, a son bord de coupe tourné dans la direction sensiblement opposée à la direction de déplacement du matériau d'enveloppement (22), à distance de son bord et vers ladite chambre à balles.

3. Ramasseuse-presse (10) selon la revendication 1 ou 2, caractérisée en ce que :
- d'une part, le porte-couteau (52) présente une partie courbée (56) concentrique avec l'axe de pivotement (53) et qui, dans la position inactive rétractée de l'ensemble formant couteau (50) est disposée pour venir en contact avec le matériau d'enveloppement (22) qui s'étend du mécanisme d'alimentation (25) à la chambre à balles, et
- d'autre part, l'organe formant couteau (55) est orienté sensiblement radialement par rapport à l'axe de pivotement (53).

4. Ramasseuse-presse (10) selon l'une quelconque des revendications précédentes, caractérisée en ce que les moyens d'entraînement (30) comportent des moyens d'accouplement d'entraînement (40) destinés à commander sélectivement d'une manière fonctionnelle le mécanisme d'alimentation (25); lesdits moyens d'accouplement d'entraînement (40) étant reliés à l'ensemble formant couteau (50) de façon qu'un actionnement des moyens d'accouplement d'entraînement (40) pour faire fonctionner le mécanisme d'alimentation (25) provoque également un déplacement de l'ensemble formant couteau (50) vers sa position inactive rétractée.

5. Ramasseuse-presse (10) selon la revendication 4, caractérisée en ce que les moyens d'accouplement d'entraînement (40) sont reliés à l'ensemble formant couteau (50) par des moyens formant tringlerie de raccordement (60) comportant un dispositif à course morte (61, 62) pour permettre un déplacement limité des moyens d'accouplement d'entraînement (40) sans provoquer un déplacement de l'ensemble formant couteau (50).

6. Ramasseuse-presse (10) selon la revendication 4 ou 5, caractérisée en ce que :
- les moyens d'entraînement (30) comportent également une courroie d'entraînement (33) entraînée autour d'une poulie menée (32) reliée au mécanisme d'alimentation (25) et d'une poulie menante (31) qui, lorsque la ramasseuse-presse (10) est en service, est entraînée constamment en rotation par les moyens d'entraînement principaux (34) de ladite ramasseuse-presse (10); et
- les moyens d'accouplement d'entraînement (40) comportent une poulie de tension (42) supportée mobile en rotation sur un bras pivotant (44) monté pivotant sur le châssis (12, 13) de la ramasseuse-presse et apte à être positionné pour obliger la poulie de tension (42) à effectuer un accouplement d'entraînement de la courroie d'entraînement (33) avec les poulies menante et menée (31, 32) en vue de transmettre une énergie d'entraînement au mécanisme d'alimentation (25); lesdits moyens d'accouplement d'entraînement (40) comportant également un organe d'actionnement linéaire (37) relié au bras pivotant (44) pour déplacer sélectivement la poulie de tension (42), afin de l'amener en prise avec la courroie d'entraînement (33) et hors de prise vis-à-vis de celle-ci.

7. Ramasseuse-presse (10) selon la revendication 6, lorsqu'elle est dépendante de la revendication 5, caractérisée en ce que :
- l'ensemble formant couteau (50) comporte un organe d'actionnement (57) assujetti d'une manière fixe à un arbre de pivotement (53) de celui-ci, qui coïncide avec l'axe de pivotement de l'ensemble formant couteau;
- les moyens formant tringlerie de raccordement (60) sont associés d'une manière fonctionnelle à l'organe d'actionnement (57) de façon qu'un mouvement de la poulie de tension (42) puisse provoquer un mouvement de pivotement de l'organe d'actionnement (57) et de l'ensemble formant couteau (50) fixe à celui-ci; et
- les moyens de verrouillage (65) sont également associés d'une manière fonctionnelle à l'organe d'actionnement (57) de façon à être déplacés dans leur position de verrouillage lorsque l'ensemble formant couteau (50) est déplacé dans la position de coupe.

8. Ramasseuse-presse (10) selon la revendication 7, caractérisée en ce que :
- les moyens formant tringlerie de raccordement comportent une tringle (60) reliée d'une manière pivotante au niveau de l'une de ses extrémités à l'organe d'actionnement (57), à une certaine distance de l'arbre de pivotement (53) de l'ensemble formant couteau (50); et
- le dispositif à course morte est formé par une liaison entre l'autre extrémité de la tringle (60) et les moyens d'accouplement d'entraînement (40) et comporte des moyens formant broches (61) reçus dans une fente allongée (62) en vue d'un déplacement dans le sens de la longueur de celle-ci.

9. Ramasseuse-presse (10) selon la revendication 7 ou 8, caractérisée en ce que :
- les moyens de verrouillage comportent un bras de verrouillage (65) monté pivotant autour de l'arbre de pivotement (53) de l'ensemble formant couteau et mobile indépendamment de l'ensemble formant couteau (50) et de l'organe d'actionnement (57) fixé à celui-ci; ledit bras de verrouillage (65) étant apte à venir en prise avec une clavette (68) fixée à un arbre (69) du mécanisme d'alimentation (25) de manière à empêcher une rotation dudit arbre (69); et
- l'organe d'actionnement (57) possède une surface d'accouplement (58) positionnée pour venir en prise avec le bras de verrouillage (65) en vue de solliciter ledit bras de verrouillage (65) afin qu'il vienne en prise avec ladite clavette (68), lorsque l'organe d'actionnement (57) est déplacé pour amener l'ensemble formant couteau (50) dans sa position de coupe; ledit bras de verrouillage (65) étant sollicité pour ne plus être en prise avec ladite clavette (68) par un ressort (71), lorsque l'organe d'actionnement (57) est déplacé pour amener l'ensemble formant couteau (50) dans sa position inactive rétractée.

10. Ramasseuse-presse (10) selon la revendication 7 ou 8, caractérisée en ce que :
- les moyens de verrouillage comportent un bras de verrouillage (65) monté pivotant autour de l'arbre de pivotement (53) de l'ensemble formant couteau et mobile indépendamment de l'ensemble formant couteau (50) et de l'organe d'actionnement (57) fixé à celui-ci; ledit bras de verrouillage (65) étant apte à venir en prise avec une clavette (68) fixée à un arbre (69) du mécanisme d'alimentation (25) de manière à empêcher une rotation dudit arbre (69); et
- l'organe d'actionnement (57) possède des première et seconde surfaces d'accouplement (58, 59) positionnées pour venir en prise avec le bras de verrouillage (65) de façon qu'un mouvement de pivotement de l'organe d'actionnement (57) oblige l'une desdites surfaces d'accouplement (58, 59) à venir en prise avec le bras de verrouillage (65) pour provoquer un mouvement de pivotement de celui-ci autour de son montage pivotant (53); ledit bras de verrouillage (65) étant sollicité pour venir en prise avec ladite clavette (68), lorsque l'ensemble formant couteau (50) est déplacé dans sa position de coupe, et pour ne plus être en prise avec ladite clavette (68), lorsque l'ensemble formant couteau (50) est déplacé dans sa position rétractée.

11. Ramasseuse-presse (10) selon la revendication 9 ou 10, caractérisée en ce que chaque surface d'accouplement (58, 59) est positionnée pour venir en prise avec une broche (73) fixée au bras de verrouillage (65).

12. Ramasseuse-presse (10) selon la revendication 10 ou 11, caractérisée en ce que la seconde surface d'accouplement (59) est positionnée pour, lors d'un mouvement de pivotement de l'organe d'actionnement (57) en vue de déplacer l'ensemble formant couteau (50) de la position de coupe vers la position rétractée, venir en prise avec le bras de verrouillage (65), respectivement la broche (73) du bras de verrouillage afin de déplacer ce dernier dans sa position de déverrouillage uniquement après que l'ensemble formant couteau (50) a parcouru une distance initiale en direction de sa position rétractée.

13. Ramasseuse-presse (10) selon l'une quelconque des revendications 10 à 12, caractérisée en ce que le bras de verrouillage (65) est sollicité pour ne plus être en prise avec ladite clavette (68) par un ressort (71).
